# EUROPÄISCHE PATENTANMELDUNG

(11) **EP 1 256 738 A2**
(43) Veröffentlichungstag der Anmeldung: **13.11.2002**
(21) Anmeldenummer: 02009182.3
(22) Anmeldetag: 25.04.2002
(51) Int. Cl.: F16D 35/02

(54) **Viskokupplung**

(30) Priorität: 11.05.2001 DE 10122795
(71) Anmelder: Horton Sachs GmbH & Co. KG, 97424 Schweinfurt (DE)
(72) Erfinder: Lutz, Manfred, Dipl.-Ing. (FH), 97424 Schweinfurt (DE)

(57) **Zusammenfassung**

Es wird eine Viskokupplung beschrieben, welche eine in einer Strömungsverbindung zwischen einer Vorrats- und einer Arbeitskammer angeordnete Ventilanordnung umfasst, die mittels einer elektromagnetischen Stelleinrichtung betätigt wird und in Abhängigkeit von einer Eingangsdrehbewegung einen Fluidstrom von der Vorrats- in die Arbeitskammer steuert. Die Viskokupplung wird dahingehend verbessert, daß der magnetische Flußpfad der elektromagnetischen Stelleinrichtung verkürzt und somit die Effizienz der Anordnung wesentlich erhöht wird.

## Beschreibung

Die Erfindung betrifft eine Viskokupplung gemäß dem Oberbegriff des Patentanspruchs 1. Derartige Viskokupplungen sind beispielsweise auf dem Gebiet der Kraftfahrzeugtechnik bekannt und dienen dazu, die Drehzahl eines mit einem Verbrennungsmotor eines Fahrzeuges gekoppelten Kühllüfters in Abhängigkeit von einem Betriebsparameter, beispielsweise der Kühlwassertemperatur eines zugeordneten Kühlers, zu steuern.

Die EP O 557 808 offenbart eine gattungsgemäße Viskokupplung mit einer elektromagnetischen Stelleinrichtung, wobei an der dem Verbrennungsmotor abgewandten Seite der Viskokupplung und koaxial zur deren Antriebswelle eine Ringspule drehfest angeordnet ist und wobei in der Vorratskammer ein an einer Achse drehbar angeordneter Drehanker aus einem ferromagnetischen Material vorgesehen ist, der mit einer Ventilscheibe verbunden ist. Der Drehanker wird radial außen von einem Flußleitring umschlossen. Sowohl der Drehanker, als auch der Flußleitring weisen in Umfangsrichtung mehrere Pole auf, die sich in einer Ausgangsstellung in Umfangsrichtung versetzt gegenüberstehen. Der Flußleitring ist im gegenüber der Ringspule drehbaren Gehäuse der Viskokupplung angeordnet und erstreckt sich in axialer Richtung bis in die umnittelbare Nähe eines die Ringspule umgebenden ferromagnetischen Gehäuses. Wird nach Vorgabe durch eine Steuerung die Ringspule mit einem Stromfluß beaufschlagt, so bildet sich unter Einbeziehung des Gehäuses der Ringspule, des Flußleitringes, des Drehankers und dessen Achse, sowie eines in diesem Bereich angeordneten Drehlagers, ein magnetischer Flußpfad aus, wobei dieser bestrebt ist, seinen magnetischen Widerstand zu minimieren. Als Folge führt der Drehanker von seiner Ausgangslage eine Verschwenkbewegung aus und nimmt eine Stellung ein, in welcher die Pole sich paarweise radial gegenüberstehen. Die an dem Drehanker fest angeordnete Ventilscheibe kann dabei je nach Vorgabe eine in der Strömungsverbindung zwischen der Arbeits- und der Vorratskammer angeordnete Ventilöffnung entweder freigeben oder schließen. Nach Beendigung der Strombeaufschlagung der Ringspule wird der Drehanker mittels eines Rückstellelementes wieder in seine Ausgangslage verschwenkt. Es besteht bei dieser Ausgestaltung der Nachteil, daß der magnetische Flußpfad über eine relativ lange Distanz geführt wird und als Folge relativ hohe magnetische Verluste und eine relativ geringe Effizienz der Anordnung erzielt wird. Des Weiteren beansprucht die Anordnung des Elektromagneten an der dem Verbrennungsmotor abgewandten Seite der Viskokupplung axialen Bauraum, der allgemein in den Motorräumen von modernen Fahrzeugen sehr eng bemessen ist und in der Regel nicht zur Verfügung steht.

Die DE 199 25 132 A1 lehrt eine Viskokupplung, die ebenfalls eine elektromagnetische Stelleinrichtung zur Steuerung einer zwischen der Vorrats- und der Arbeitskammer in Strömungsverbindung angeordneten Ventilöffnung aufweist. Auf der dem Verbrennungsmotor zugewandten Seite der Viskokupplung ist eine Ringspule angeordnet, welche eine aus einem magnetisch leitfähigem Material bestehende Antriebswelle der Viskokupplung umschließt. Innerhalb der Vorratskammer ist eine Ankerplatte aus einem ebenfalls magnetisch leitfähigen Material angeordnet, welche mit einer mittels eines Scharniers schwenkbar gelagerten Ventilplatte verbunden ist. Die der Ringspule zugewandte Nabe des Kupplungsgehäuses ist mit einem eingesetzten ersten Leitring aus magnetischen Material versehen, der mit einem Ende in Kontakt mit der Ringspule steht und an seinem anderem, der Arbeitskammer zugewandten Ende, mit einem Spalt an einen zweiten Leitring aus magnetischen Material angrenzt, der den Läufer der Viskokupplung durchsetzt und in einem Bereich vor dem Anker der Ventilplatte endet. Wird die Ringspule mit einem Strom beaufschlagt, so bildet sich unter Einschluß der beiden Leitringe, der Ankerplatte und der Antriebswelle ein magnetischer Fluß aus, als dessen Folge die Ventilplatte eine im wesentlichen axiale Bewegung ausführt und die zwischen der Vorrats- und der Arbeitskammer angeordnete Ventilöffnung freigibt. Auch bei dieser Variante ist der Magnetkreis konstruktiv sehr aufwendig und weiträumig erstreckend gestaltet.

Der Erfindung liegt ausgehend vom Stand der Technik die Aufgabe zugrunde, eine Viskokupplung so weiterzubilden, daß die magnetischen Verluste einer innerhalb der Viskokupplung ausgebildeten elektromagnetischen Stelleinrichtung reduziert und deren Effizienz bei kompakter Ausbildung erheblich gesteigert wird.

Die Aufgabe wird gelöst durch die kennzeichnenden Merkmale des Patentanspruchs 1.

Durch Anordnung des Drehankers auf einer Achse unmittelbar benachbart zum Elektromagneten wird der magnetische Flußpfad erheblich verkürzt, indem das Stellglied näher an der Magnetfeldquelle der elektromagnetischen Stelleinrichtung positioniert wird. Eine ebenso einfache wie wirkungsvolle Weiterleitung einer Bewegung des Drehankers auf die Ventilanordnung wird dadurch erzielt, dass die Wirkverbindung zu der Ventilanordnung mit einer drehfest mit dem Drehanker verbundenen Welle hergestellt wird. Somit können die magnetischen Flußführungsmittel außerhalb von Vorrats- oder Arbeitskammer verbleiben.

In einer vorteilhaften Weiterbildung sieht die Erfindung vor, die Welle und damit den Drehanker am Kupplungsgehäuse radial im Bereich der Vorratskammer auszubilden. In Verbindung mit einer kompakteren Gestaltung des Ankers kann bei stark verkürztem magnetischen Flußpfad die elektromagnetische Stellanordnung insgesamt platzsparend ausgebildet werden.

In einer weiteren Verbesserung sieht die Erfindung vor, den Elektromagneten im wesentlichen hufeisenförmig auszubilden und dessen Pole radial beabstandet in Bezug zu der Antriebswelle anzuordnen. Auf diese Weise kann die Magnetfeldquelle äußerst kompakt und effizient gestaltet werden.

Alternativ bezüglich der vorerwähnten Variante erweist es sich als günstig, den Elektromagneten in Form einer Ringspule auszubilden. Eine derartige Ringspule umfasst mehrere kreisförmig ausgeführte Windungen eines elektrischen Leiters, welche sich sehr kostengünstig fertigen lassen.

In einer vorteilhaften Weiterbildung der Erfindung ist vorgesehen, an dem Elektromagneten ein magnetisch leitfähiges Gehäuse auszubilden. Bei einer Strombeaufschlagung des Elektromagneten werden dadurch die die elektrischen Leiter konzentrisch umgebenden magnetischen Feldlinien gebündelt und diese können in einer vorbestimmten Bahn verlaufen.

Es erweist sich als günstig, magnetische Flußführungsmittel am Kupplungsgehäuse auszubilden, wobei diese eine im wesentlichen zu dem Drehanker gleiche Axiallage einnehmen. Durch diese Ausgestaltung wird ein axial kurzer, d.h. platzsparender, räumlicher Erstreckungsbereich der elektromagnetischen Stelleinrichtung realisiert.

Vorzugsweise bildet sich bei einer Strombeaufschlagung des Elektromagneten an dessen Gehäuse auf der dem Kupplungsgehäuse zugewandten Seite mindestens ein magnetischer Pol aus. Das von diesem ausgehende Magnetfeld kann leicht in den Drehanker oder die dem Kupplungsgehäuse zugeordneten Fußführungsmittel zur Ausbildung eines geschlossenen Magnetkreises eingekoppelt werden.

Weiterhin wird durch den Drehanker, die Welle und das Verschlußelement eine Drehhebeleinrichtung gebildet, welche ein Rückstellelement aufweist. Dadurch ist gewährleistet, daß die elektromagnetische Stelleinrichtung im nichtaktivierten Zustand eine vorbestimmte Lage einnimmt und die Viskokupplung in einen vorbestimmten Betriebszustand übergeht.

Es ist mit Vorteil mindestens ein Anschlagelement vorgesehen, welches eine Verschwenkbewegung der Drehhebeleinrichtung begrenzt. Auch diese Ausgestaltung bewirkt die Einnahme vordefinierter Lagezustände des Verschlußelements.

In Bezug auf die vorerwähnte Ausführung ist es sehr vorteilhaft, wenn die elektromagnetische Stelleinrichtung im nicht erregten Zustand des Elektromagneten die Ventilöffnung freigibt und diese im erregten Zustand schließen kann. Bei Ausfall einer für den Elektromagneten vorgesehenen Steuerelektronik oder des Elektromagneten selbst, geht die Viskokupplung selbstständig in einen beriebssicheren Zustand über, wobei das in der Viskokupplung enthaltene Fluid in einem kontinuerlichen Kreislauf von der Vorratskammer durch die Ventilöffnung in die Arbeitskammer und von dort mittels eines Pumporgans wieder zurück in die Vorratskammer strömt und das Kupplungsgehäuse über das Fluid in Drehmitnahme angetriebenen zum Läufer der Viskokupplung steht.

In einer weiteren vorteilhaften Ausführung umfasst der Drehanker einen Permanentmagneten. Die dadurch geschaffene Drehhebeleinrichtung nimmt selbsttätig eine definierte Ausgangslage ein, womit die Ausführung eines Rückstellelementes entfallen kann.

Es ist weiterhin von Vorteil, den Elektromagnet auf der der Antriebswelle zugewandten Seite der Viskokupplung anzuordnen. Hierbei kann der Elektromagnet beispielsweise an einem Motorgehäuse gegen Verdrehung gesichert werden. Vorteilhaft können auch die elektrischen Zuführungen des Elektromagneten bei einer motorseitigen Montage verlegt werden.

In einer weiteren mit besonderem Vorteil behafteten Variante umschließt die Ringspule eine Antriebswelle der Viskokupplung. Der Elektromagnet kann somit bauraumsparend auf der einem Verbrennungsmotor zugewandten Seite angeordnet werden.

Mit Vorteil wird zum Betreiben einer Viskokupplung ein Verfahren angewandt, bei welchem die Stärke der Drehmomentübertragungskopplung zwischen dem Läufer und dem Gehäuse durch eine impulsartige Bestromung des Elektromagneten eingestellt wird. Damit kann eine die Ventilöffnung öffnende und schließende Stellbewegung des Verschlußelements so gesteuert werden, daß sich im zeitlichen Mittel eine Fluidströmung einstellt, welche einem beliebigen Zwischenzustand der vollständig geöffneten bzw. vollständig geschlossenen Ventilöffnung entspricht.

Im folgenden wird die vorliegende Erfindung mit Bezug auf die beiligenden Zeichnungen anhand bevorzugter Ausgestaltungsformen detailliert beschrieben. Es zeigt:
- Fig. 1: eine Längsschnittansicht einer Ausgestaltungsform der erfindungsgemäßen Viskokupplung;
- Fig. 2: eine vergrößerte Längsschnittansicht einer elektromagnetischen Stelleinrichtung;
- Fig. 3a,b: einen Lateralschnittansicht eines an einem Kupplungsgehäuse angeordneten Drehankers und einer zugeordneten Ventilanordnung im nichtaktivierten Zustand (a) bzw. in einem aktivierten Zustand (b);
- Fig. 4: einen Längsschnitt einer alternativen Anordnung einer elektromagnetischen Stelleinrichtung;
- Fig. 5: eine schematische Darstellung einer alternativen Ausgestaltung der Polschuhe;
- Fig. 6: eine schematische Darstellung eines Drehankers, der einen Permanentmagneten umfasst.

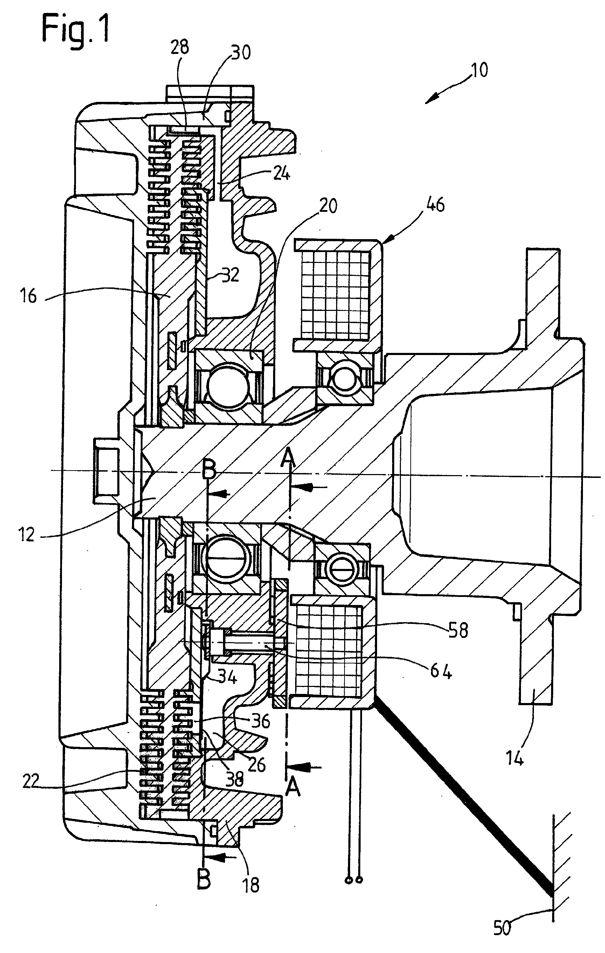

Die Fig. 1 zeigt eine Viskokupplung 10, die einen mit einer Antriebswelle 12 über einen Antriebsflansch 14 drehfest verbundenen Läufer 16 umfaßt, der in einem nichtmagnetischem, z.B. aus einem Aluminiumwerkstoff bestehendem Kupplungsgehäuse 18 angeordnet ist. Beispielsweise kann bei Einsatz der erfindungsgemäßen Viskokupplung 10 zum Antreiben oder Ankoppeln eines Ventilators das Kupplungsgehäuse 18 einen Kühllüfter oder dergleichen tragen. Das Kupplungsgehäuse 18 ist bezüglich des Läufers 16, der Antriebswelle 12 und dem Antriebsflansch 14, über eine Lageranordnung 20 frei drehbar gelagert.

Im radial äußeren Bereich bildet das Kupplungsgehäuse 18 eine Arbeitskammer 22, in dem das Kupplungsgehäuse 18 und der Läufer 16 sich mit ihren jeweiligen rippenförmigen Oberflächen zur Erhöhung der Gesamtoberfläche wechselseitig ineinandergreifen. Im Kupplungsgehäuse 18 ist weiterhin eine Verbindungsleitung 24 vorgesehen, über welche Fluid aus der Arbeitskammer 22 in eine Vorratskammer 26 geleitet werden kann.

Radial außen ist im Bereich der Arbeitskammer 22 und der Verbindungsleitung 24 am Kupplungsgehäuse 18 ein Stauelement 28 einer als Staudruckpumpe ausgebildeten Pumpenanordnung 30 vorgesehen, welches bei einer Relativdrehung zwischen Läufer 16 und Kupplungsgehäuse 18 das im Bereich der Arbeitskammer 22 vorhandene Fluid, das durch Fliehkrafteinwirkung nach radial außen gezogen wird, in eine Öffnung im Kupplungsgehäuse 18 fördert, von wo aus das Fluid über die Verbindungsleitung 24 in die Vorratskammer 26 strömen kann. Die Vorratskammer 26 und der radial innere Bereich der Arbeitskammer 22 sind durch eine Trennwand 32 voneinander getrennt. Ferner ist im Strömungsweg zwischen der Vorratskammer 26 und der Arbeitskammer 22 eine allgemein mit 34 bezeichnete Ventilanordnung vorgesehen, durch welche die Fluidverbindung zwischen der Vorratskammer 26 und der Arbeitskammer 22 wahlweise hergestellt beziehungsweise unterbrochen werden kann. Dazu ist in der Trennwand 32 eine Öffnung 36 ausgebildet, welche durch ein vorgespanntes Verschlußelement 38 verschließbar ist. Beispielsweise kann das Verschlußelement 38 durch eine schwenkbewegliche Ventilplatte 38 gebildet sein, die axial einseitig an der Trennwand 32 anliegt und durch eine Feder in der Öffnungsstellung vorgespannt ist.

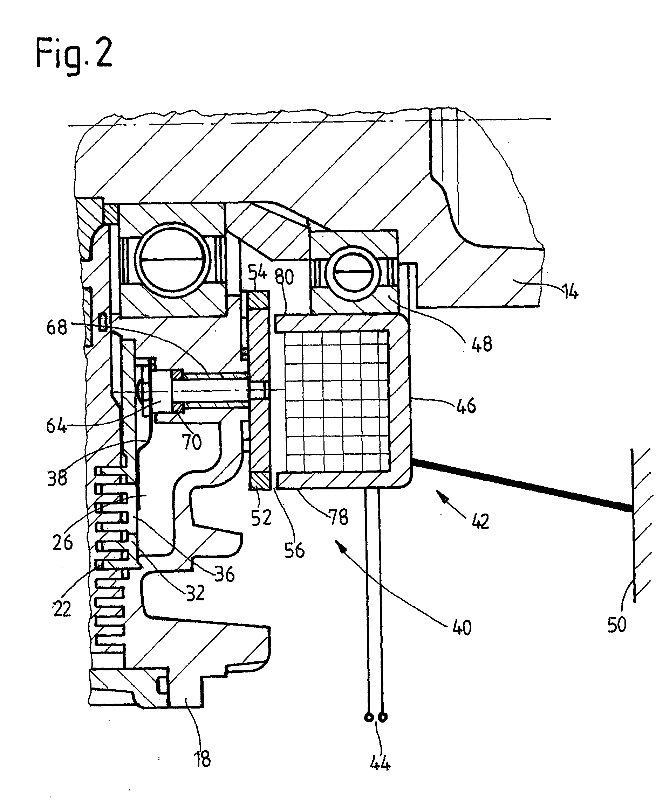

Im folgenden wird anhand von Fig. 2 der Aufbau und die Funktion einer erfindungsgemäßen elektromagnetischen Stelleinrichtung 40 zur Betätigung der Ventilplatte 38 beschrieben.

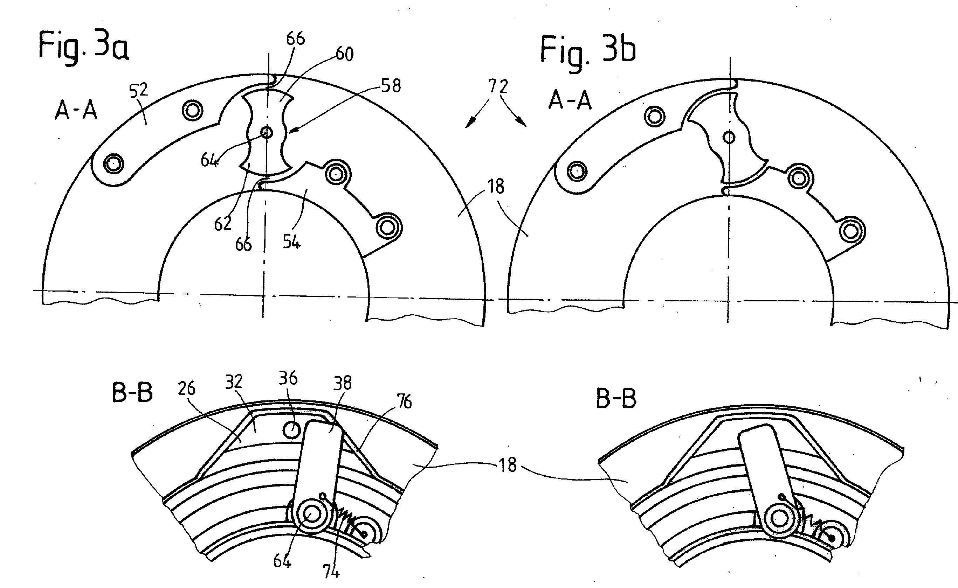

Die Stelleinrichtung 40 umfaßt zunächst einen Elektromagnet 42, der von einer Ringspule 42 mit elektrischen Anschlüssen 44 gebildet wird, welche in einem magnetisch leitfähigen Gehäuse 46 eingefaßt ist. Das Gehäuse 46 weist einen U-förmigen Querschnitt auf, dessen offene Seite dem Kupplungsgehäuse 18 zugewandt ist. Radial innen ist die Ringspule 42 über ein Lager 48 auf dem Antriebsflansch 14 gelagert. Ferner ist das Gehäuse 46 mit einem feststehenden oder festlegbaren Bauteil 50, beispielsweise einem Fahrzeugrahmen oder einem Motorblock 50 oder dergleichen, drehfest angeordnet.
Bei einer Strombeaufschlagung der Ringspule 42 dient das Gehäuse 46 dazu, die die Ringspule 42 umgebenden magnetischen Feldlinien zu bündeln und diese in dessen Inneren zu führen, wobei an den offenen Enden des Gehäuses 46 magnetische Pole ausgeprägt werden. Das Gehäuse 46 stellt somit magnetische Flußleitmittel dar.
Axial gegenüberstehend zum Elektromagneten 42 und auf im wesentlichen gleicher radialer Lage zu diesem ist am Kupplungsgehäuse ein Paar aus zwei Polschuhen 52, 54 aus magnetisch leitfähigen Material angeordnet, welche über einen axialen Luftspalt 56 mit dem Elektromagneten 42 in Wirkverbindung stehen. In den Fig. 3 a,b sind die Polschuhe 52, 54 in Form von Kreisringsegmenten ausgebildet und mit Befestigungsmitteln, beispielweise einer Schraub- oder einer Nietverbindung, in Umfangsrichtung teilweise überlappend, jedoch radial zueinander versetzt am Kupplungsgehäuse 18 befestigt. Die sich radial gegenüberliegenden Abschnitte der Polschuhe 52, 54 weisen je eine etwa kreissegmentförmige Ausnehmung auf, zwischen denen ein Drehanker 58 angeordnet ist, dessen Pole 60, 62 eine dazu korrespondierende Form aufweisen. Der Drehanker 58 ist zentral drehfest auf einer Welle 64 montiert und mit dieser verschwenkbar. Radial zwischen dem Drehanker 58 und den Polschuhen 52, 54 ist ein Luftspalt 66 ausgebildet. Die Welle 64 ist in einer sich axial im Kupplungsgehäuse 18 erstreckenden Bohrung 68 angeordnet und weist Dichtmittel 70 auf, die ein unbeabsichtigtes Austreten von Fluid aus der Vorratskammer 26 verhindern. Die Welle 64 ragt in die Vorratskammer 26 hinein und und trägt an deren einen Ende drehfest die Ventilplatte 38, welche z.B. aus einem Blechstreifen besteht. Dieser liegt durch dessen Formgebung bestimmt axial vorgespannt an der Trennwand 32 an und gibt in dem in Fig. 3a dargestellten Zustand die Öffnung 36 vollständig frei. Durch den Drehanker 58, die Welle 64 und die Ventilplatte 38 wird eine Drehhebeleinrichtung 72 gebildet. Weiterhin ist eine als Rückstellelement 74 dienende Feder in Wirkverbindung zwischen dem Kupplungsgehäuse 18 und der Ventilplatte 38 angeordnet, welche bei nichtaktiviertem Zustand der elektromagnetischen Stelleinrichtung 40 im wesentlichen entspannt ist und somit die Ventilplatte 38 die Öffnung 36 freigibt. Eine Wandung 76 der im Kupplungsgehäuse 18 ausgebildeten Vorratskammer 26 dient gleichzeitig als Anschlag 76, an welchem die Ventilplatte 38 in diesem Zustand zur Anlage kommt. Der Drehanker 58 kann zumindest über einen begrenzten Winkelbereich, beispielsweise etwa 20° bis 30°, eine Verschwenkbewegung ausführen, bevor diese durch den Anschlag 76 begrenzt wird. Als Anschlag kann beispielsweise auch ein entsprechend ausgebildeter Polschuh fungieren oder ein weiteres nicht dargestelltes gehäusefest angeordnetes Element. Wie aus Fig. 2 ersichtlich ist der radial außen angeordneten Polschuh 52 einem radial außenliegenden Abschnitt 78 des U-förmigen Gehäuses 46 und der radial innen angeordnete Polschuh 54 einem radial innenliegenden Abschnitt 80 des Gehäuses 46 zugeordnet. Die einander zugeordneten Komponenten bilden auf diese Weise magnetische Wirkungspaare. Für eine bezüglich der Relativstellung des Kupplungsgehäuses 18 zum drehfest angeordneten Elektromagneten 42 gewünschete magnetische Wechselwirkung ist erforderlich, daß bei einer Drehbewegung des Kupplungsgehäuses 18 die Polschuhe 52, 54 bzw. die Gehäuseabschnitte 78, 80 im magnetischen Wirkungsbereich des jeweils zugeordneten Elementes sind. Diesem Gedanken folgend sind prinzipiell zahlreiche Gestaltungsvarianten denkbar. In Fig. 1 ist der Elektromagnet 42 unter Einschluß der Antriebswelle 12 ringförmig ausgebildet und von den Polschuhen 52, 54 wird nur ein Kreissegment bedeckt, welches bei einer Drehbewegung des Kupplungsgehäuses 18 eine der Form des Elektromagneten 42 entsprechende Kreisbahn durchläuft.

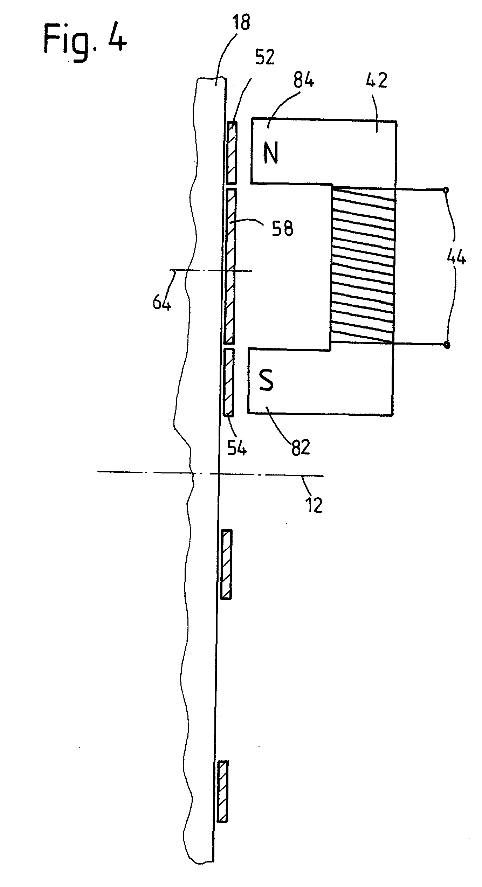

In Fig. 4 ist alternativ eine zu der erläuterten Anordnung inverse Anordnung schematisch dargestellt, wobei durch einen Elektromagneten 42 nur ein Kreissegment abgedeckt wird und die Polschuhe 52, 54 zumindest abschnittweise kreisringförmig ausgebildet werden. Beispielsweise kann der Elektromagnet 42 eine Hufeisenform aufweisen, wobei dessen Magnetpole 82, 84 radial zum Kupplungsgehäuse 18 angeordnet sind.

Den dargestellten Anordnungen ist gemeinsam, daß der gegenseitige radiale Abstand der Polschuhe 52, 54 und der gegenseitige radiale Abstand der offenen Gehäuseenden 78, 80 dabei größer ist als der durch den axialen Luftspalt 56 gebildete Abstand eines Polschuhs 52, 54 zu dem jeweils zugeordneten Gehäuseabschnitt 78, 80. Damit wird sichergestellt, daß die von den Gehäuseabschnitten 78, 80 des Elektromagneten 42 ausgehenden magnetischen Feldlinien im wesentlichen in die entsprechenden Polschuhe 52, 54 eingekoppelt werden und nicht über den radialen Luftspalt 66 zwischen den offenen Gehäuseenden 78, 80 kurzgeschlossen werden. Die Drehhebeleinrichtung 72 ist mittels einer als Rückstellelement 74 fungierenden Feder in einer Ausgangsstellung so vorgespannt, daß sich die Pole 60, 62 des Drehankers 58 bei einer Strombeaufschlagung des Elektromagneten 42 im Wirkungsbereich der Polschuhe 52, 54 befinden, und zwar derart, daß der zwischen den Polschuhen 52, 54 gebildete Luftspalt wesentlich größer ist als der zwischen einem Pol 60, 62 und dem zugeordneten Polschuh 52, 54 befindliche Luftspalt 66, jedoch andererseits so, daß der Zustand maxiamaler radialer Überlappung zwischen den Polschuhen 52, 54 und den Polen 60, 62 des Drehankers 58 noch nicht erreicht ist. Damit wird gewährleistet, daß die von den Polschuhen 52, 54 ausgehenden magnetischen Feldlinien zum wesentlichen Teil in den Drehanker 58 einkoppeln können und nicht bereits unter Umgehung von diesem kurzgeschlossen werden.

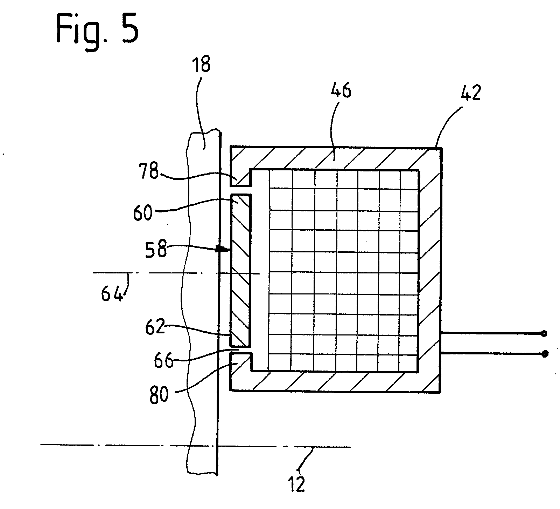

Alternativ zu den in den Figuren 1 - 3 dargestellen Ausführungsformen mit am Kupplungsgehäuse 18 angeordneten Polschuhen 52, 54 können diese auch unmittelbar am Elektromagneten 42 ausgeführt sein. Dazu kann beispielsweise das Gehäuse 46 mit weiteren, den magnetischen Fluß führbaren, Elementen verbunden sein. Es kann bei einer entsprechenden Formgebung der Gehäuseabschnitte 78, 80, wie beispielsweise in Fig. 5 dargestellt, sogar vollständig auf zusätzliche Elemente verzichtet werden. In diesem Fall stehen die Abschnitte 78, 80 des Gehäuses 46 über den Luftspalt 66 direkt in elektromagnetischer Wechselwirkung mit den Polen 60, 62 des Drehankers 58.

Weitere Gestaltungsmöglichkeiten bestehen auch in Bezug auf den Drehanker 58, welcher in Fig. 3a,b mit zwei Polen 60, 62 ausgebildet und zentral mit der Welle 64 verbunden ist. Für die Erzeugung eines Eingangsdrehmomentes kann der Drehanker 58 auch endseitig mit der Welle 64 verbunden werden. Jedoch sind auch Ausgestaltungsformen mit einer Mehrzahl von Polen, beispielsweise 3 oder mehr, realisierbar.

Eine Stromzufuhr zur Ringspule 42 hat zur Folge, daß aufgrund der elektromagnetischen Wechselwirkung ein in sich geschlossener magnetischer Flußpfad ausgebildet wird, der vom Gehäuse 46 des Elektromagneten 42, über den Luftspalt 56 in den Polschuh 52 geleitet wird und von dort über den Luftspalt 66 in den Drehanker 58 einkoppelt wird, um dann unter Einbeziehung des Luftspaltes 66 in den zweiten Polschuh 54 und letztlich über den Luftspalt 56 wieder in das Gehäuse 46 eintritt. Wie für das Gehäuse 46 des Elektromagneten 42 bereits erläutert, stellen auch die Polschuhe 52, 54 magnetische Flußführungsmittel dar, deren Funktion darin besteht, den magnetischen Fluß in den Drehanker 58 einzukoppeln. Bei ihrer Ausbreitung sind die magnetischen Feldlinien bestrebt, ihre Weglänge innerhalb des Magnetkreises und somit den magnetischen Widerstand zu minimieren. Infolge dessen führt der Drehanker 58 eine Verschwenkbewegung ausgehend von der in Fig. 3a oben dargestellten Stellung entgegen dem Urzeigersinn aus, die entweder durch Erreichung des Zustandes des minimalsten magnetischen Widerstandes oder durch einen Anschlag begrenzt wird. Die Funktion des Drehankers 58 basiert somit auf dem elektromotorischen Wirkprinzip. Die Größe des dabei erzeugten Drehmomentes ist unter anderem von der Relativstellung des Drehankers 58 zu den zugeordneten Polschuhen 52, 54 und von der Größe der Luftspalte 56, 66 abhängig. Stehen sich ein Polschuh 52, 54 und ein Pol 60, 62 des Drehankers 58 exakt radial gegenüber, so wird kein Drehmoment generiert. Mit zunehmendem Drehwinkel steigt das Drehmoment kontinuierlich an bis ein Maximun erreicht wird, um bei noch weiterer Vergrößerung des Drehwinkels wieder stetig abzufallen. Günstigerweise wird der Arbeitsbereich mit Hinblick auf den Drehwinkel der Drehhebeleinrichtung 72 so gewählt, daß dieser den Winkelbereich des maximalen Drehmoments einschließt. Auf diese Weise können zur Erzielung eines hohen Wirkungsgrades der Anordnung die Geometrie der Polschuhe 52, 54 und die Ausgangslage des Drehankers 58 angepaßt werden. Die Verschwenkbewegung des Drehankers 58 wird gleichzeitig über die Welle 64 auf die Ventilplatte 38 weitergeleitet, welche sich in Fig. 3b oben entgegen dem Uhrzeigersinn von einer Öffnungsstellung in eine Schließstellung bewegt hat, dabei die Öffnung 36 abdeckt und die Strömungsverbindung zwischen der Vorrats-26 und der Arbeitskammer 22 blockiert. Durch Ansteuerung der elektromagnetischen Stelleinrichtung 40 kann somit der Schließ- oder Öffnungszustand des Ventilanordnung 34 geschaltet oder eingestellt werden.

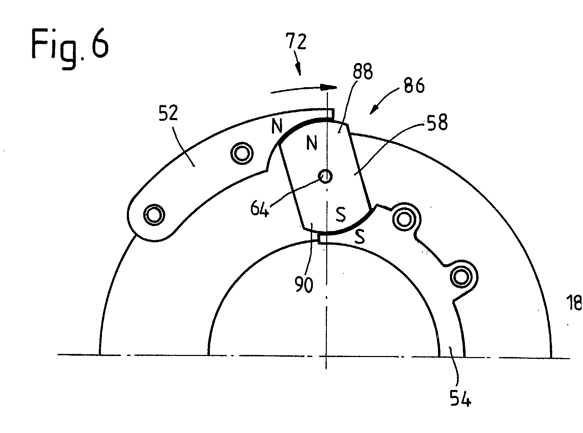

Gemäß Fig. 6 wird in einer weiteren alternativen Ausbildung als Drehanker 58 ein scheibenförmiger Permanentmagnet 86 benutzt, wobei zwei gegenüberliegende Endbereiche 88, 90 einen magnetischen Nord- bzw. Südpol bilden. Im unbestromten Zustand des Elektromagneten 42 orientiert sich der Drehanker 58 aufgrund der magnetischen Wechselwirkung mit den Polschuhen 52, 54 und nimmt dabei eine vorbestimmte Lage ein, wobei dessen Magnetpole 88, 90 den Polschuhen 52, 54 radial gegenüberliegen und die Ventilanordnung 34 geöffnet ist. Wird der Elektromagnet 42 mit einem Strom beaufschlagt, so bilden sich an den Polschuhen 52, 54 ebenfalls ein magnetischer Nord- und Südpol aus. Die Stromrichtung wird dabei so gewählt, daß die Polschuhe 52, 54 zu den korrespondierenen Polen 88, 90 des Permanentmagneten 86 gleichnamige Pole bilden. Die daraus resultierende Abstoßungskraft bewirkt eine Verschwenkbewegung des Drehankers 58 in Pfeilrichtung, wobei die Ventilplatte 38 die Öffnung 36 zumindest teilweise freigibt. Nach Wegnahme des elektrischen Stromflusses geht der Drehanker 58 aufgrund der magnetischen Anziehungskraft wieder in seine Ausgangslage zurück und die Öffnung 36 wird wieder freigegeben. An der Drehhebeleinrichtung 72 ist z.B. in einer bereits beschriebenen Weise ein Anschlag ausgeführt, welcher den Verschwenkbereich auf beispielsweise 30° begrenzt. Dadurch wird sichergestellt, daß die Pole 88, 90 des Permanentmagneten 86 genau ein und demselben Polschuh 52, 50 zugeordnet sind und beim Betreiben der Anordnung die Stromrichtung des Elektromagneten 42 nur eimalig festgelegt werden muß. Wird jedoch die Drehhebeleinrichtung 72 ohne Anschlag ausgeführt, so treten bei freier Drehbarkeit des Drehankers 58 um 360° zwei Rastpositionen auf. Zur Realisierung des Wirkprinzips ist es deshalb in diesem Fall erforderlich, die Orientierung des Permanentmagneten 86 festzustellen und dementsprechend die Stromrichtung in der Spule 42 zu wählen. Auf ein Rückstellelement kann hierbei verzichtet werden. Es besteht auch die Möglichkeit, den Drehanker 58 aus einem magnetisch leitfähigen Körper herzustellen, der mindestens einen Permanentmagneten umfasst. Somit kann der Einsatz von kostenintensiven Magnetmaterial reduziert werden.

Durch die Anordnung des Drehankers 58 auf der dem Elektromagnet 42 zugewandten Seite des Kupplungsgehäuses 18 wird ein gegenüber vorbekannten Lösungen wesentlich verkürzter Magnetkreis mit einem deutlich höheren Wirkungsgrad gebildet.

Hat sich beispielsweise vorangehend die Viskokupplung 10 in einem Drehmomentübertragungszustand befunden, in welchem aufgrund der Scherwirkung des in der Arbeitskammer 22 vorhandenen Fluids eine Drehmomentübertragungskopplung zwischen dem Kupplungsgehäuse 18 und dem Läufer 16 vorhanden war, so wird durch Schließen der Öffnung 36 das Nachströmen von Fluid in die Arbeitskammer 22 unterbunden und zum anderen aufgrund der dann erhöhten Drehzahldifferenz zwischen Kupplungsgehäuse 18 und Läufer 16 die Förderleistung der Staudruckpumpe 30 erhöht, mit der Folge, daß die Arbeitskammer 22 sehr schnell entleert wird und der Drehmomentkopplungszustand zwischen dem Läufer 16 und dem Kupplungsgehäuse 18 aufgehoben wird.

Soll dieser Zustand aufgehoben werden und wieder eine Drehmomentübertragungsverbindung hergestellt werden, so wird die Bestromung der Ringspule 42 beendet, mit der Folge, daß fehlende magnetische Wechselwirkung der Drehanker 58 nicht mehr in der vorher eingenommenen Stellung gehalten wird und durch die Wirkung des Rückstellelementes oder selbstständig wieder zurück in die Ausgangsstellung bewegt wird, wobei gleichzeitig die Ventilplatte 38 die Öffnung 36 freigibt. Es wird dann das Fluid von der Vorratskammer 26 über die Öffnung 36 in die Arbeitskammer 22 eintreten und sehr rasch zur Wiederherstellung des Drehmomentkopplungszustands führen.

Ferner kann bei allen dargestellten Ausgestaltungsformen die Stärke der Drehmomentübertragungskopplung zwischen dem Läufer 16 und dem Kupplungsgehäuse 18 durch eine impulsartige Bestromung der Spule 42, beispielsweise mit impulsbreitenmodulierter Signalcharakteristik, eingestellt werden. Das heißt, je nach Tastverhältnis läßt sich ein Verhältnis zwischen Offen- und Schließzustand der Ventilanordnung 34 einstellen. Im vollständig unbestromten Zustand, in dem die freie Zirkulation des Fluids in der Viskokupplung 10 im wesentlichen nicht beeinträchtigt ist, ist die maximale Drehmomentkopplung vorhanden, und im vollständig bestromten Zustand, in welchem eine Fluidverbindung zwischen Vorratskammer 26 und Arbeitskammer 22 nicht vorhanden ist, ist eine im wesentlichen vollständige Entkopplung von Läufer 16 und Kupplungsgehäuse 18 vorgesehen.

## Patentansprüche

1. Viskokupplung mit einer Vorratskammer und einer von dieser getrennten, über wenigstens eine Öffnung in Strömungsverbindung bringbare einen Läufer aufnehmende Arbeitskammer, eine die Strömungsverbindung zwischen der Vorrats- und der Arbeitskammer beeinflussende Ventilanordnung, die in Abhängigkeit von einer Eingangsdrehbewegung einer elektromagnetischen Stelleinrichtung einen Fluidstrom von der Vorrats- in die Arbeitskammer steuert, wobei die elektromagnetische Stelleinrichtung einen Elektromagneten und einen an einem Kupplungsgehäuse ausgebildeten Drehanker umfasst, der mit einem Verschlußelement der Ventilanordnung in Wirkverbindung steht, wobei bei einer Erregung des Elektromagneten ein magnetischer Flußpfad unter Einschluß des Drehankers ausgeprägt wird,
**dadurch gekennzeichnet, daß** der Drehanker (58) unmittelbar benachbart zum Elektromagneten (42) angeordnet ist und seine Wirkverbindung mit dem Verschlußelement (38) der Ventilanordnung (34) durch drehfeste Anordnung beider Elemente (38, 58) auf einer gemeinsamen in dem Kupplungsgehäuse drehbar gelagerten Welle (64) realisiert ist.

2. Viskokupplung nach Anspruch 1,
**dadurch gekennzeichnet, daß** die Welle (64) am Kupplungsgehäuse (18) radial im Bereich der Vorratskammer (26) ausgebildet ist.

3. Viskokupplung nach Anspruch 1 oder 2,
**dadurch gekennzeichnet, daß** der Elektromagnet (42) im wesentlichen hufeisenförmig ausgebildet ist und dessen Pole (82, 84) radial beabstandet in Bezug zu der Antriebswelle (12) angeordnet sind.

4. Viskokupplung nach Anspruch 1 oder 2,
**dadurch gekennzeichnet, daß** der Elektromagnet (42) eine Ringspule umfaßt.

5. Viskokupplung nach einem der Ansprüche 1 bis 4,
**dadurch gekennzeichnet, daß** der Elektromagnet (42) ein magnetisch leitfähiges Gehäuse (46) umfasst.

6. Viskokupplung nach einem der Ansprüche 1 bis 5,
**dadurch gekennzeichnet, daß** magnetischen Flußführungsmittel (52, 54) am Kupplungsgehäuse (18) ausgebildet sind und eine im wesentlichen zu dem Drehanker (58) gleiche Axiallage einnehmen.

7. Viskokupplung nach einem der Ansprüche 5 und 6, **dadurch gekennzeichnet, daß** sich bei einer Strombeaufschlagung des Elektromagneten (42) an dessen Gehäuse (46) auf der dem Kupplungsgehäuse (18) zugewandten Seite mindestens ein magnetischer Pol ausbildet.

8. Viskokupplung nach einem der Ansprüche 1 bis 7,
**dadurch gekennzeichnet, daß** der Drehanker (58), die Welle (64) und das Verschlußelement (38) eine Drehhebeleinrichtung (72) bilden und diese ein Rückstellelement (74) aufweist.

9. Viskokupplung nach Anspruch 8,
**dadurch gekennzeichnet, daß** eine Verschwenkbewegung der Drehhebeleinrichtung (72) durch mindestens ein Anschlagelement (76) begrenzt wird.

10. Viskokupplung nach einem der Ansprüche 1 bis 9,
**dadurch gekennzeichnet, daß** die elektromagnetische Stelleinrichtung (40) im nicht erregten Zustand des Elektromagneten (40) eine Öffnung (36) der Ventilanordnung (34) freigeben und diese im erregten Zustand schließen kann.

11. Viskokupplung nach einem der Ansprüche 1 bis 10,
**dadurch gekennzeichnet, daß** der Drehanker (58) einen Permanentmagneten (86) umfasst.

12. Viskokupplung nach einem der Ansprüche 1 bis 11,
**dadurch gekennzeichnet, daß** der Elektromagnet (42) auf der der Antriebswelle (12) zugewandten Seite der Viskokupplung (10) angeordnet ist.

13. Viskokupplung nach einem der Ansprüche 1 bis 12,
**dadurch gekennzeichnet, daß** der Elektromagnet (42) eine Antriebswelle (12) der Viskokupplung umschließt.

14. Verfahren zum Betreiben einer Viskokupplung nach einem der Ansprüche 1 bis 13, **dadurch gekennzeichnet, daß** die Stärke der Drehmomentübertragungskopplung zwischen dem Läufer (16) und dem Kupplungsgehäuse (18) durch eine impulsartige Bestromung des Elektromagneten (42) eingestellt wird.
